# EUROPÄISCHE PATENTSCHRIFT

(11) **EP 4 245 579 B1**
(45) Veröffentlichungstag und Bekanntmachung des Hinweises auf die Patenterteilung: **01.04.2026**
(21) Anmeldenummer: 23160361.4
(22) Anmeldetag: 07.03.2023
(51) Int. Cl.: B60D 1/62, B60D 1/54, B60D 1/64

(54) **BETRIEBSGERÄT ZUM BETREIBEN EINER ANHÄNGEKUPPLUNG**
OPERATING DEVICE FOR OPERATING A TRAILER COUPLING
APPAREIL DE FONCTIONNEMENT POUR FAIRE FONCTIONNER UN ATTELAGE

(30) Priorität: 15.03.2022 DE 102022106033
(43) Veröffentlichungstag der Anmeldung: 20.09.2023
(73) Patentinhaber: WESTFALIA - Automotive GmbH, 33378 Rheda-Wiedenbrück (DE)
(72) Erfinder: Bloch, Oliver, 33775 Versmold (DE)
(74) Vertreter: Patentanwälte Bregenzer und Reule Partnerschaftsgesellschaft mbB

(56) Entgegenhaltungen:
- EP-A1- 2 952 367
- DE-A1- 102011 014 882
- DE-A1- 102011 055 583
- DE-A1- 102013 102 865

## Beschreibung

Die Erfindung betrifft ein Betriebsgerät zum Betreiben einer Anhängekupplung oder als Bestandteil einer Anhängekupplung für ein Kraftfahrzeug, wobei die Anhängekupplung einen an einem an dem Kraftfahrzeug befestigten oder befestigbaren Halter angeordneten Kupplungsarm aufweist, an dessen freiem Endbereich ein Kuppelelement, insbesondere eine Kupplungskugel, zum Ankuppeln eines Anhängers oder Lastenträgers angeordnet ist, gemäß dem Oberbegriff des Anspruchs 1.

Ein derartiges Betriebsgerät mit einem Schutzgehäuse ist beispielsweise in EP 2 952 367 A1 erläutert.

Ein weiteres Betriebsgerät in Gestalt einer Steckdose geht aus DE 10 2013 102 865 A1 hervor.

Ein weiteres Betriebsgerät mit einem Schutzgehäuse ist beispielsweise in DE 20 2011 103 345 U1 erläutert. Dieses Schutzgehäuse weist an seiner Außenwand beispielsweise einen elektrischen Steckverbinder zur Herstellung elektrischer Verbindungen zu einem Bordnetz des Kraftfahrzeugs auf. Alternativ kann beispielsweise eine Kabeltülle am Schutzgehäuse vorhanden sein, durch die hindurch ein Anschlusskabel zum Anschluss der Betriebseinrichtung bzw. des Betriebsgeräts in den Innenraum des Schutzgehäuses führbar ist.

Ein derartiges Schutzgehäuse ist in der Regel ein thermoplastisches, mechanisch belastbares Schutzgehäuse. Die Aufnahmekapazität des Innenraums des Schutzgehäuses ist somit schon bei der Herstellung von Spritzgusswerkzeugen für das Schutzgehäuse vorgegeben. Es gibt jedoch Anwendungssituationen, bei denen hinaus weitere elektrische Funktionseinheiten vorteilhaft sind, beispielsweise Druckschalter zur Gabe von Steuerbefehlen und dergleichen.

DE 20 2005 018 574 U1 betrifft einen Steckverbinder für Kraftfahrzeuge mit einer integrierten Leuchte, an den ein Kabel angeschlossen ist.

DE 10 2004 046 905 A1 betrifft eine Elektrohandwerkzeugmaschine mit einem Elektrokabel, welches in einer Kabeltülle aufgenommen ist, wobei diese Kabeltülle Mittel zur unverlierbaren Aufbewahrung eines Datenträgers aufweist.

DE 10 2011 055 583 A1 betrifft eine Steckdose für ein Kraftfahrzeug mit einer Kabeltülle, die eine zusätzliche Einführöffnung zum Einführen einer Signalleitung aufweist.

Zur Lösung der Aufgabe ist ein Betriebsgerät gemäß der technischen Lehre des Anspruchs 1 vorgesehen.

Zur Lösung der Aufgabe ist auch eine Anhängekupplung mit einem Betriebsgerät dieser Art vorgesehen.

Es ist dabei ein Grundgedanke, dass die Kabeltülle neben der Aufnahme für das Kabel und dessen Abdichtung gegenüber Umwelteinflüssen eine Zusatzfunktion erfüllt, nämlich die elektrische Funktionseinheit aufnimmt. Somit kann bei Bedarf das Schutzgehäuse sozusagen durch die Kabeltülle funktional erweitert werden, wobei nicht nur ein Kabel durch die Kabeltülle dicht aufgenommen werden kann, sondern die Aufnahmekapazität des Schutzgehäuses sozusagen durch die Kabeltülle erweitert wird.

Es ist auch möglich, dass das Material des Schutzgehäuses zur Aufnahme der Funktionseinheit weniger gut geeignet ist als das Material der Kabeltülle, was nachfolgend noch deutlicher wird, sodass die Anordnung der Funktionseinheit in der Kabeltülle weitere Vorteile bringt.

Es versteht sich, dass die Kabeltülle mehrere Aufnahmen, beispielsweise zwei Aufnahmen, für mehrere elektrische Funktionseinheiten aufweisen kann. Es ist auch möglich, dass die Aufnahme der Kabeltülle zur Aufnahme mehrerer, beispielsweise zweier, Funktionseinheiten ausgestaltet und/oder vorgesehen ist.

Das Kabel kann einen oder mehrere elektrische Leiter umfassen. Das Kabel kann einen Kabelmantel umfassen, in welchem die elektrischen Leiter angeordnet sind. Das Kabel kann auch durch mehrere Leiter, die nicht in einem Kabelmantel angeordnet sind, gebildet sein.

Es ist auch möglich, dass in dem Kabel-Aufnahmekanal mindestens eine von dem Kabel separate und/oder außerhalb eines Mantels des Kabels angeordnete Leitung angeordnet ist.

Bevorzugt weist der Kabel-Aufnahmekanal mindestens eine Verengungskontur auf, um das Kabel dicht aufzunehmen. Die Verengungskontur kann beispielsweise eine konische Schräge zu einem freien Ende des Kabel-Aufnahmekanals, beispielsweise zu dessen Mündung oder Kanalöffnung hin umfassen oder dadurch gebildet sein. Es ist auch möglich, dass der Kabel-Aufnahmekanal beispielsweise mit einem Dichtungsmaterial verfüllt ist, beispielsweise einem Klebstoff, Silikonmasse oder dergleichen, um das Kabel oder gegebenenfalls mehrere Kabel dicht aufzunehmen. Ferner möglich ist es, dass der Kabel-Aufnahmekanal anhand einer thermischen Schrumpfung verengt ist, um das Kabel dicht zu umschließen.

Erfindungsgemäß ist vorgesehen, dass das Schutzgehäuse aus einem härteren Material besteht als die Kabeltülle.

Ein bevorzugtes Konzept kann vorsehen, dass das Schutzgehäuse steifer als die Kabeltülle ist. Weiterhin ist es möglich, dass das Schutzgehäuse Verstärkungsstruktur, beispielsweise Stützrippen oder eine Rippenstruktur, aufweist. Mithin kann also das Schutzgehäuse eine hohe Steifigkeit aufweisen, die eine Vergrößerung des Innenraums des Schutzgehäuses nicht ohne weiteres ermöglicht. Die Kabeltülle erweitert in dieser Situation durch die mindestens eine Aufnahme für die Funktionseinheit die Aufnahmekapazität des Innenraums.

Das Schutzgehäuse kann beispielsweise eine Art Hartschalengehäuse sein. Das Schutzgehäuse kann einteilig oder mehrteilig sein, beispielsweise zwei Gehäuseteile, insbesondere zwei Gehäuseschalen, aufweisen.

Der Innenraum des Schutzgehäuses ist mit einem Innenraum der Kabeltülle verbunden. Die Kabeltülle weist eine Aufnahmekavität für die mindestens eine Funktionseinheit auf. In der Kabeltülle ist sowohl das Kabel als auch die mindestens eine Funktionseinheit aufgenommen oder aufnehmbar.

Vorteilhaft ist vorgesehen, dass das Schutzgehäuse aus thermoplastischem Kunststoff und/oder Metall besteht. Somit kann das Schutzgehäuse beispielsweise einen Antriebsmotor und/oder ein Getriebe der Anhängekupplung optimal schützen. Es ist möglich, dass an dem Schutzgehäuse mindestens eine Stützkontur zum Abstützen der Betriebseinrichtung, also beispielsweise dem Antriebsmotor, angeordnet ist.

Vorteilhaft ist das Schutzgehäuse fest mit dem Halter oder mit einer mit dem Halter verbundenen Stützkomponente der Anhängekupplung verbunden. Vorteilhaft ist es, wenn das Schutzgehäuse mit dem Halter oder der Stützkomponente verschraubt ist. Die Stützkomponente ist bezüglich des Halters vorzugsweise ortsfest angeordnet. Beispielsweise kann ein Stützflansch vor den Halter vorstehen, an dem das Schutzgehäuse angeordnet ist. Das Schutzgehäuse ist mit dem Halter oder der Stützkomponente beispielsweise verschraubt und/oder anhand einer Steckverbindung gehalten und/oder stoffschlüssig verbunden.

Vorzugsweise ist vorgesehen, dass die Kabeltülle aus einem elastischen und/oder flexiblen Material, insbesondere aus Gummi und/oder einem synthetischen Kautschuk, bevorzugt Ethylen-Propylen-Dien-Kautschuk, besteht. Eine derartig flexible Kabeltülle ermöglicht beispielsweise auch, dass die Aufnahme für die Funktionseinheit eine gewisse Nachgiebigkeit aufweist, sodass eine Aufnahmekapazität der Aufnahme für die Funktionseinheit vergrößerbar ist.

Das Material der Kabeltülle weist vorzugsweise eine Shore-A-Härte zwischen 40 und 65 auf. Insbesondere hat das Material der Kabeltülle eine Härte von ca. 50-60 Shore A.

Die Funktionseinheit kann vielfältige Ausgestaltungen aufweisen. Insbesondere ist die Funktionseinheit oder umfasst die Funktionseinheit ein optisches und/oder akustisches Ausgabemittel.

Bevorzugt kann vorgesehen sein, dass die Funktionseinheit eine optische und/oder akustische Funktionseinheit, insbesondere einen Lautsprecher, umfasst oder dadurch gebildet ist. Die optische Funktionseinheit umfasst beispielsweise eines oder mehrere Leuchtmittel.

Ein bevorzugtes Konzept sieht vor, dass eine Schallaustrittsöffnung des Lautsprechers zu dem und/oder in den Innenraum des Schutzgehäuses gerichtet ist. Beispielsweise kann das Schutzgehäuse als ein Schallreflektor für den Lautsprecher ausgebildet sein oder einen Schallreflektor bilden. Beispielsweise kann das Schutzgehäuse in der Art eines Gehäuses einer Lautsprecher-Box ausgestaltet sein oder als ein solches Gehäuse dienen.

Das Material der Kabeltülle ist vorzugsweise schalldurchlässig. Somit kann beispielsweise Schall von der Funktionseinheit durch eine Außenwand der Kabeltülle abgestrahlt werden. Es ist auch möglich, dass von dem Schutzgehäuse reflektierter Schall die Außenwand der Kabeltülle durchdringt.

Vorteilhaft ist vorgesehen, dass die Funktionseinheit einen durch einen Bediener betätigbaren Schalter umfasst oder dadurch gebildet ist. Beispielsweise kann der Schalter ein elektrischer Druckschalter, insbesondere ein Tastschalter, sein oder dadurch gebildet sein. Das flexible Material der Kabeltülle im Bereich der Aufnahme ermöglicht beispielsweise eine Tastbetätigung eines derartigen Tastschalters oder Druckschalters durch einen Bediener. Der Schalter kann beispielsweise zum Schalten mindestens einer elektrischen Funktion des Betriebsgeräts ausgestaltet sein, beispielsweise zum Lösen einer Fixiereinrichtung der Anhängekupplung und/oder zum Auslösen einer Verstellbewegung der Anhängekupplung.

An dieser Stelle sei erwähnt, dass die Anhängekupplung folgende Merkmale aufweisen kann.

Bevorzugt ist der Kupplungsarm anhand eines Lagers, insbesondere eines Schwenklagers, zwischen einer Gebrauchsstellung, die zum Anhängen eines Anhängers oder Lastenträgers vorgesehen ist, und einer Ruhestellung oder Nichtgebrauchsstellung verstellbar, in der keine Lastenträger oder Anhänger an den Kupplungsarm ankuppelbar ist. In der Gebrauchsstellung steht der Kupplungsarm beispielsweise weiter vor ein Heck des Kraftfahrzeugs vor als in der Ruhestellung oder Nichtgebrauchsstellung. Der Kupplungsarm kann an dem Lager um eine oder mehrere Schwenkachsen verschwenkbar und/oder entlang einer oder mehrere Achsen verschieblich gelagert sein. Das Lager ist beispielsweise an dem Halter, der mit dem Kraftfahrzeug verbunden oder verbindbar ist, angeordnet.

Weiterhin vorteilhaft ist es, wenn die Anhängekupplung eine Fixiereinrichtung zum Fixieren des Kupplungsarms in der Gebrauchsstellung und/oder der Ruhestellung aufweist. Die Fixiereinrichtung ist vorzugsweise durch eine Feder oder Federanordnung in Richtung einer den Kupplungsarm bezüglich des Halters fixierenden Fixierstellung belastet.

In dem Schutzgehäuse des Betriebsgeräts ist beispielsweise ein Fixierantrieb für die Fixiereinrichtung ganz oder teilweise aufgenommen.

Weiterhin vorteilhaft ist es, wenn der Antriebsmotor einen Bestandteil einer Antriebseinrichtung zum Antreiben der Anhängekupplung, beispielsweise zum Antreiben der vorgenannten Fixiereinrichtung und/oder des Kupplungsarms zwischen der Gebrauchsstellung und der Ruhestellung, bildet.

Die Antriebseinrichtung kann vorteilhaft ein Getriebe, beispielsweise ein Winkelgetriebe, Verteilergetriebe oder dergleichen, aufweisen, über das der Antriebsmotor die Fixiereinrichtung und/oder den Kupplungsarm antreibt. Mithin sind also in dem Innenraum des Schutzgehäuses vorteilhaft nicht nur der mindestens eine Antriebsmotor angeordnet, sondern mindestens ein Getriebe, über welches der mindestens eine Antriebsmotor die Fixiereinrichtung und/oder den Kupplungsarm antreibt.

Vorteilhaft ist vorgesehen, dass die Funktionseinheit zur Ausgabe der insbesondere akustischen und/oder optischen Information als ein Betriebshinweis oder Warnhinweis ausgebildet ist, während eine Fixiereinrichtung, mit der der Kupplungsarm bezüglich des Halters ortsfest fixierbar ist, eine Lösestellung einnimmt, bei der der Kupplungsarm bezüglich des Halters beweglich, insbesondere verschwenkbar ist, und/oder während einer Verstellung des Kupplungsarms bezüglich des Halters zwischen einer zum Anhängen eines Anhängers oder Befestigen eines Lastenträgers vorgesehenen Gebrauchsstellung und einer näher zu dem Kraftfahrzeug hin verstellten Ruhestellung, in der kein Lastenträger oder Anhänger an den Kupplungsarm ankuppelbar ist. Beispielsweise ist die Funktionseinheit durch ein Steuergerät, mit dem der Antriebsmotor des Betriebsgeräts ansteuerbar ist, zur Ausgabe der Information als Betriebshinweis oder Warnhinweis in einer oder beiden der vorgenannten Situationen ansteuerbar. Es ist aber auch möglich, dass beispielsweise bei einer Bestromung des Antriebsmotors gleichzeitig die Funktionseinheit bestromt wird, d. h. dass der Antriebsmotor und die Funktionseinheit parallel geschaltet sind oder der Antriebsmotor die Funktionseinheit ansteuert, sodass die Funktionseinheit den vorgenannten Betriebshinweis oder Warnhinweis während eines oder beider der vorgenannten Betriebszustände ausgibt, wenn der Antriebsmotor beispielsweise bestromt wird.

Zwar kann die Betriebseinrichtung ein Steuergerät im Innenraum des Schutzgehäuses umfassen. Es ist aber auch möglich, dass ein Steuergerät zur Ansteuerung der Anhängekupplung, beispielsweise zur Ansteuerung von der Fixiereinrichtung und/oder dem Antrieb des Kupplungsarms, außerhalb des Betriebsgeräts angeordnet ist und über das Kabel mit dem elektrischen Antriebsmotor elektrisch verbunden ist. Das außerhalb des Schutzgehäuses angeordnete Steuergerät kann einen Bestandteil der Anhängekupplung oder des Betriebsgeräts bilden.

Bevorzugt ist die an der Kabeltülle vorgesehene Aufnahme für die Funktionseinheit als eine Steckaufnahme ausgestaltet.

Die Aufnahme für die Funktionseinheit weist vorzugsweise einen Boden sowie eine Umfangswand auf. Die Umfangswand ist vorzugsweise eine zylindrische Wand oder Ringwand.

Zwischen der Umfangswand und einem Außenumfang der in der Aufnahme aufgenommenen Funktionseinheit kann zumindest abschnittsweise ein Abstand vorhanden sein.

Bevorzugt ist es, wenn die Aufnahme mindestens eine Formschlusskontur zum formschlüssigen Halten der Funktionseinheit aufweist. Somit ist also die Funktionseinheit formschlüssig an und in der Aufnahme gehalten.

Eine vorteilhafte Maßnahme sieht vor, dass die mindestens eine Formschlusskontur zum verdrehsicheren Halten der Funktionseinheit ausgestaltet ist. Somit kann also beispielsweise die Funktionseinheit in einer bestimmten Winkelposition in der Aufnahme gehalten sein. Somit ist beispielsweise eine Richtung, in der die Funktionseinheit optische oder akustische Informationen ausgibt, durch die verdrehsichere Position gewährleistet. Auch in dem Falle, wenn die Funktionseinheit einen Schalter umfasst oder als Schalter ausgebildet ist, ist es vorteilhaft, wenn dieser in einer vorbestimmten Winkelposition und verdrehsicher in der Aufnahme gehalten ist.

Bevorzugt ist es, wenn die mindestens eine Formschlusskontur an zueinander winkeligen und/oder zueinander entgegengesetzten Seiten, insbesondere an der Umfangswand angeordnete, Formschlussaufnahmen zur Aufnahme von Formschlussvorsprüngen der Funktionseinheit aufweist. Beispielsweise können an der Funktionseinheit, insbesondere deren Gehäuse, Formschlussvorsprünge, insbesondere Zapfen, vorgesehen sein, die in die Formschlussaufnahmen eingreifen. Vorteilhaft ist es, wenn diese Formschlussaufnahmen nahe bei dem Boden der Aufnahme angeordnet sind.

Vorteilhaft ist vorgesehen, dass die Funktionseinheit in der Aufnahme in einem Klemmsitz gehalten ist. Ein derartiger Klemmsitz kann beispielsweise dadurch realisiert sein, dass das Material der Kabeltülle im Bereich der Aufnahme elastisch oder nachgiebig ist. Die Elastizität kann beispielsweise derart sein, dass ein Formschlussvorsprung der Funktionseinheit eine Wandfläche der Aufnahme beim Einbringen der Funktionseinheit in die Aufnahme verdrängen kann, bis der Formschlussvorsprung in die Formschlussaufnahme der Aufnahme sozusagen einrastet.

Eine vorteilhafte Maßnahme sieht also beispielsweise vor, dass die Aufnahme mindestens einen elastischen Wandabschnitt aufweist, der durch einen vor einen Außenumfang der Funktionseinheit vorstehenden Vorsprung beim Einbringen der Funktionseinheit in die Aufnahme elastisch verformbar ist.

Die Kabeltülle ist mit dem Schutzgehäuse beispielsweise formschlüssig und/oder kraftschlüssig und/oder stoffschlüssig verbunden. Beispielsweise ist die Kabeltülle mit dem Schutzgehäuse verklebt.

Es ist auch möglich, dass die Kabeltülle in das Schutzgehäuse eingeknöpft ist.

Es ist auch möglich, dass die Kabeltülle an der Schutzgehäuse angespritzt ist.

Vorteilhaft ist es, wenn die Verbindungspartie mindestens einen sich um den Kabel-Durchlass ringförmig erstreckenden Kragenvorsprung oder Stützflansch zur dichtenden Anlage an einer die Durchtrittsöffnung des Schutzgehäuses begrenzenden Wand, insbesondere Außenwand, des Schutzgehäuses aufweist. Der Kragenvorsprung oder Stützflansch ist beispielsweise im Innenraum des Schutzgehäuses angeordnet, wobei ein den Kragenvorsprung oder Stützflansch tragender Wandabschnitt der Kabeltülle die Durchtrittsöffnung des Schutzgehäuses durchsetzt und nach außen vor das Schutzgehäuse vorsteht.

Es können mehrere derartige Kragenvorsprünge oder Stützflansche vorgesehen sein. Die Stützflansche oder Kragenvorsprünge können beispielsweise in einer Steckrichtung, in der die Kabeltülle in die Durchtrittsöffnung des Schutzgehäuses einsteckbar sind, hintereinander angeordnet sein.

Zwischen den Stützflanschen oder Kragenvorsprüngen kann beispielsweise eine ringförmige Aufnahme oder Aufnahmenut gebildet sein, in die eine die Durchtrittsöffnung des Schutzgehäuses begrenzende Wand des Schutzgehäuses eingreifen kann.

Ein bevorzugtes Konzept sieht vor, dass die Verbindungspartie eine sich um den Kabel-Durchlass ringförmig erstreckende Aufnahmenut zur Aufnahme einer die Durchtrittsöffnung des Schutzgehäuses begrenzenden Wand, insbesondere Außenwand, des Schutzgehäuses aufweist. Diese Aufnahmenut kann beispielsweise durch nebeneinander angeordnete Stützflansche begrenzt sein.

Die Kabeltülle kann zur Verbesserung der Einbausituation und/oder Verlegung des Kabels bezüglich des Schutzgehäuses beitragen.

Es ist vorteilhaft, wenn die Kabeltülle eine höhere Steifigkeit als das von ihr aufgenommene Kabel aufweist. So trägt diese Maßnahme dazu bei, dass die Kabeltülle dem Kabel eine Richtung vorgibt und/oder das Kabel führt.

Ein bevorzugtes Konzept sieht zum Beispiel vor, dass die Kabeltülle eine winkelige oder bogenförmige Gestalt aufweist, wobei der Kabel-Durchlass an der Verbindungspartie und eine Längsachse des Kabel-Aufnahmekanals, entlang derer das Kabel in dem Kabel-Aufnahmekanal geführt ist, zueinander winkelig, insbesondere rechtwinkelig, sind. Somit kann beispielsweise die Kabeltülle dem Kabel in dem Kabel-Aufnahmekanal eine Richtung vorgeben, die zu einer optimalen weiteren Führung des Kabels, beispielsweise an einem die Anhängekupplung tragenden Träger, der Karosserie des Kraftfahrzeugs oder dergleichen, bei trägt.

Die winkelige oder bogenförmige Gestalt der Kabeltülle kann optional zur Führung des Kabels dienen.

So sieht eine Maßnahme vorteilhaft vor, dass die Aufnahme für die Funktionseinheit in einem Winkelabschnitt zwischen der Verbindungspartie und dem Kabel-Durchlass angeordnet ist. Beispielsweise ist die Aufnahme an einer von dem Schutzgehäuse abgewandten Seite der Kabeltülle angeordnet.

Bevorzugt ist vorgesehen, dass die Kabeltülle einen Knickschutz für das Kabel darstellt oder bildet oder aufweist. Beispielsweise weist die Kabeltülle im Bereich des Kabel-Aufnahmekanals Versteifungsstrukturen, Rippen oder dergleichen auf. Auch ein Material der Kabeltülle im Bereich des Kabel-Aufnahmekanals kann eine zu einer Versteifung beitragende und/oder zur Bildung eines Knickschutzes geeignete Stärke aufweisen.

Das Material der Kabeltülle ist in einer Ausführungsform ganz oder teilweise lichtundurchlässig. Somit werden die von der Kabeltülle eingehausten Komponenten, z.B. Kabel und Funktionseinheit(en), auch vor Licht geschützt.

Es ist aber auch möglich, dass das Betriebsgerät eine Lichtquelle, beispielsweise eine Warn-Lichtquelle, insbesondere eine LED, aufweist, deren Licht im Außenbereich des Betriebsgeräts sichtbar sein soll.

Es kann vorgesehen sein, dass die Kabeltülle, insbesondere im Bereich der Aufnahme, einen lichtdurchlässigen Wandabschnitt aufweist. Der Wandabschnitt ist beispielsweise für von der Funktionseinheit erzeugtes Licht transluzent. Es ist aber auch möglich, dass eine sonstige, beispielsweise im Innenraum des Schutzgehäuses angeordnete Einrichtung des Betriebsgeräts ein Leuchtmittel aufweist, zum Beispiel die Betriebseinrichtung selbst, wobei der Wandabschnitt für von dem Leuchtmittel erzeugtes Licht lichtdurchlässig ist.

Vorteilhaft ist es, wenn an mindestens einem Endbereich, vorzugsweise an beiden Endbereichen des Kabels ein Steckverbinder zur Herstellung elektrischer Verbindungen zu der Betriebseinrichtung und/oder einem Bordnetz des Kraftfahrzeugs angeordnet ist. Der mindestens eine Steckverbinder ist vorzugsweise ein Steckverbinder, der gegenüber Umwelteinflüssen, insbesondere Feuchtigkeit, abgedichtet ist. An dieser Stelle sei aber erwähnt, dass ein an dem Kabel angeordneter Steckverbinder, der im Innenraum des Schutzgehäuses angeordnet ist, keine derartige Abdichtung benötigt. Vorteilhaft ist jedenfalls der Steckverbinder, der außerhalb der an einem vor den Kabel-Aufnahmekanal frei vorstehenden Abschnitt des Kabels angeordnet ist, gegenüber Umwelteinflüssen abgedichtet.

Das Schutzgehäuse und die Kabeltülle sind dicht miteinander verbunden.

Vorteilhaft ist vorgesehen, dass das Schutzgehäuse und die Kabeltülle den Innenraum des Schutzgehäuses gegen ein Eindringen von Feuchtigkeit bei einer Tauchtiefe von mindestens ca. 80 cm bis mindestens 1 m und einer Wirkdauer für ca. 1 Stunde schützen. Es kann aber auch vorteilhaft sein, wenn die Kabeltülle und das Schutzgehäuse den Innenraum des Schutzgehäuses gegen ein Eindringen von Feuchtigkeit bei einer Tauchtiefe von mindestens 80 cm bis mindestens 1 m und bei einer Wirkdauer von mindestens 30 Minuten, vorzugsweise mindestens 40 Minuten, weiter bevorzugt mindestens 50 Minuten, noch weiter bevorzugt 1 Stunde, schützen. Es ist auch möglich, dass das Schutzgehäuse und die Kabeltülle den Innenraum des Schutzgehäuses gegen Eindringen von Feuchtigkeit bei einer Tauchtiefe von mehr als 1 m, beispielsweise 1,20 m oder 1,30 m schützen. Die Wirkdauer kann dabei auch mehr als 1 Stunde betragen. Es ist aber auch möglich, dass bei geringerer Tauchtiefe die Wirkdauer länger ist als bei größerer Tauchtiefe.

Weiterhin ist es vorteilhaft, dass das Schutzgehäuse und die Kabeltülle den Innenraum des Schutzgehäuses gegen Eindringen von Staub schützen.

Auch eine elektrische Schutzklasse kann vorteilhaft durch die Kombination von Schutzgehäuse und Kabeltülle erfüllbar sein. Beispielsweise ist vorgesehen, dass das Schutzgehäuse und die daran angeordnete Kabeltülle die elektrische Schutzklasse IP 67 erfüllen.

An dieser Stelle sei erwähnt, dass die elektrischen Komponenten innerhalb des Innenraums von Schutzgehäuse und Kabeltülle keine oder geringere Anforderungen gegen das Eindringen von Feuchtigkeit aufweisen müssen. So kann beispielsweise eine konventionelle, nicht gegen Feuchtigkeit abgedichtete Funktionseinheit als Funktionseinheit vorgesehen sein, die in der Kabeltülle aufgenommen ist.

Ein vorteilhaftes Konzept kann vorsehen, dass anstelle der Kabeltülle, die eine Aufnahme für die Funktionseinheit aufweist, eine sozusagen konventionelle Kabeltülle an dem Schutzgehäuse angeordnet werden kann. So ist vorteilhaft vorgesehen, dass die Kabeltülle mit der Aufnahme für die elektrische Funktionseinheit lösbar an dem Schutzgehäuse angeordnet ist, sodass anstelle der Kabeltülle mit der Aufnahme für die elektrische Funktionseinheit an dem Schutzgehäuse eine Kabeltülle ohne Aufnahme für eine elektrische Funktionseinheit anordenbar oder angeordnet ist. Bevorzugt bilden die Kabeltülle mit Aufnahme und die Kabeltülle ohne Aufnahme sowie das Schutzgehäuse ein System.

Der Halter ist beispielsweise an einer Trägeranordnung angeordnet oder durch eine Trägeranordnung gebildet, wobei die Trägeranordnung mit dem Kraftfahrzeug verbunden oder verbindbar ist. Die Trägeranordnung umfasst beispielsweise einen Querträger, der sich im am Kraftfahrzeug montierten Zustand quer an einem Heck des Kraftfahrzeugs erstreckt. Der Querträger kann mit Seitenträgern mit dem Kraftfahrzeug verbunden sein.

Nachfolgend werden Ausführungsbeispiele der Erfindung anhand der Zeichnung erläutert. Es zeigen:
- Figur 1: eine teilweise schematische perspektivische Schrägansicht von hinten oben auf eine Anhängekupplung, die an einem Fahrzeug angeordnet ist,
- Figur 2: einen linken Abschnitt der Ansicht gemäß Figur 1 mit einer Kabeltülle,
- Figur 3: eine perspektivische Schrägansicht der Anhängekupplung gemäß vorstehender Figuren mit einem Schutzgehäuse,
- Figur 4: die Anhängekupplung gemäß Figur 3, jedoch teilweise geschnitten,
- Figur 5: die Anhängekupplung der Figuren 3, 4 mit entferntem Schutzgehäuse, und
- Figur 6: eine perspektivische Schrägansicht der Kabeltülle gemäß vorstehender Figuren,
- Figur 7: eine Seitenansicht der Kabeltülle gemäß Figur 6,
- Figur 8: eine Teildarstellung einer Anhängekupplung ähnlich der Anhängekupplung gemäß vorstehender Figuren, etwa entsprechend einem Ausschnitt A1 in Figur 1, jedoch mit einer anderen Kabeltülle,
- Figur 9: Kabeltülle gemäß Figur 8 in perspektivischer Schrägansicht vergleichbar mit Figur 6, und
- Figur 10: die Kabeltülle gemäß Figuren 8, 9 in einer Seitenansicht vergleichbar mit Figur 7.

Eine Anhängekupplung 10 umfasst einen Kupplungsarm 20 mit einem Armabschnitt 21, an dessen einem, freiem Endbereich ein Kuppelelement 22, insbesondere eine Kupplungskugel, angeordnet ist, und dessen anderer Endbereich mit einem Lagerelement 23 verbunden oder einstückig ist, der an einer Lageraufnahme 24 eines Lagers 25, insbesondere eines Schwenklagers, um eine Schwenkachse S zwischen einer Gebrauchsstellung G und einer Ruhestellung R schwenkbar gelagert ist.

Die Lageraufnahme 24 des Lagers 25 ist an einem Halter 14 angeordnet, der an einem Heck 93 einer Karosserie 91 eines Kraftfahrzeugs 90, beispielsweise eines Kraftfahrzeugs mit Elektromotor und/oder Verbrennungsmotor, angeordnet ist.

In der Gebrauchsstellung G steht der Kupplungsarm 20 vor einen Stoßfänger 92 des Kraftfahrzeugs 90 vor, sodass ein Anhänger A oder ein Lastenträger an das Kuppelelement 22 angekuppelt werden kann. In der Ruhestellung R steht der Kupplungsarm 20 weniger weit vor das Heck 93 des Kraftfahrzeugs 90 vor und ist beispielsweise vor oder unter den Stoßfänger 92 zurück verschwenkt, sodass kein Anhänger A oder Lastenträgers an das Kuppelelement 22 angekuppelt werden kann.

Der Halter 14 ist an einer Trägeranordnung 11 gehalten, die an der Karosserie 91 des Kraftfahrzeugs 90 befestigt oder befestigbar ist. Die Trägeranordnung 11 umfasst beispielsweise einen den Halter 14 tragenden Querträger 12, der anhand von Seitenträgern 13 an der Karosserie 91 befestigt ist.

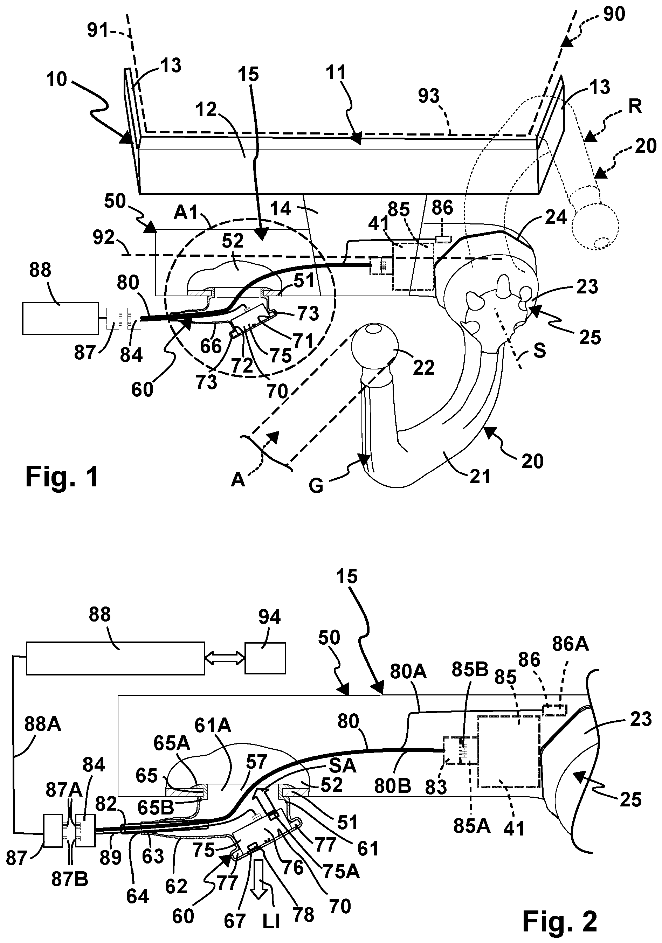

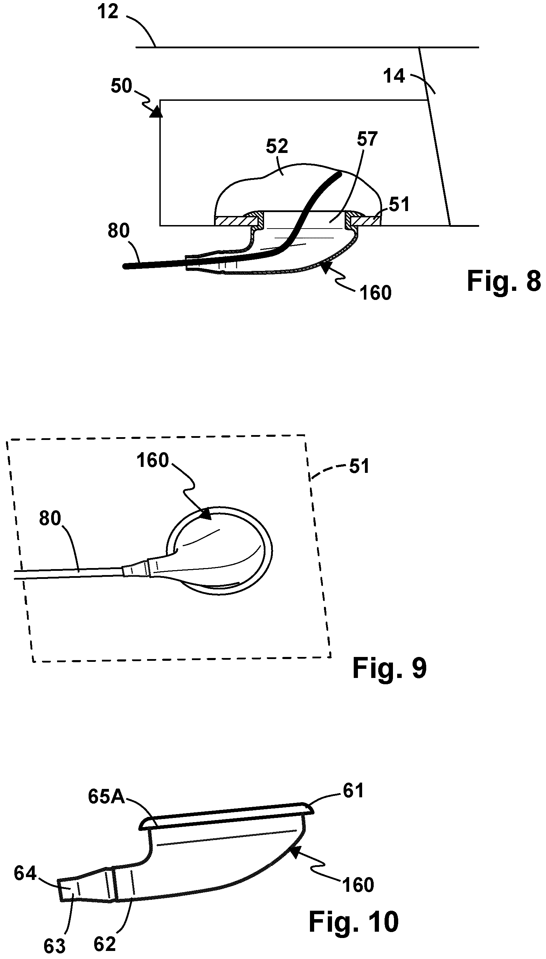

Der in den Figuren 1 und 8 schematisch angedeutete Halter 14 weist beispielsweise Schraubenaufnahmen 14A für in der Zeichnung nicht dargestellte Schrauben auf, mit denen der Halter 14 mit dem Querträger 12 verschraubt ist.

Das Lagerelement 23 ist an einem Lagerkörper 26 des Lagers 25 gehalten. Der Lagerkörper 26 ist am Halter 14 drehbar gelagert, nämlich mittels eines Drehlager-Elements 27, welches in einer Lageraufnahme 28 des Halters 14 drehbar aufgenommen ist.

Das Lagerelement 23 ist an dem Lagerkörper 26 linear bezüglich der Schwenkachse S verschieblich, sodass das Lagerelement 23 und somit der Kupplungsarm 20 vom Halter 14 weg und zum Halter 14 hin bewegbar ist.

Der Kupplungsarm 20 kann bezüglich des Halters 14 durch eine Fixiereinrichtung 30 in der Gebrauchsstellung G und der Ruhestellung R fixiert werden.

Die Fixiereinrichtung 30 umfasst beispielsweise Fixierelemente 31, 32, die in einer Fixierstellung F in Eingriff miteinander sind, sodass der Kupplungsarm 20 am Halter 14 in der Gebrauchsstellung G oder der Ruhestellung R ortsfest fixiert ist. Die Fixierelemente 31, 32 sind an dem Lagerelement 23 und dem Halter 14 angeordnet und durch eine Verschiebebewegung des Lagerelements 23 entlang der Schwenkachse S außer Eingriff und somit in eine Lösestellung L oder in Eingriff und somit in die Fixierstellung F bringbar. Beispielsweise sind die Fixierelemente 31, 32 als Kugeln und Kugelkalotten ausgestaltet. Die Fixierelemente 31, 32 sind beispielsweise ringförmig um die Schwenkachse S angeordnet.

Die Fixiereinrichtung 30 weist einen Fixierantrieb 33 zur Verstellung zwischen der Lösestellung L und der Fixierstellung F auf. Der Fixierantrieb 33 umfasst einen Antriebskörper 34, beispielsweise einen bolzenförmigen Antriebskörper oder Sperrbolzen, der entlang einer Verstellachse LA verstellbar ist und mittels Antriebsflächen 35 in einer der Fixierstellung F zugeordneten Position bezüglich der Verstellachse LA Fixierkörper 36, zum Beispiel Kugeln, in Richtung von Fixieraufnahmen 37 beaufschlagt, wodurch das Lagerelement 23 in Richtung des Halters 14 betätigt wird, sodass die Fixierelemente 31, 32 in Eingriff miteinander gelangen.

Der Antriebskörper 34 ist durch eine Feder 39 in seine der Fixierstellung F zugeordneten Längsposition bezüglich der Verstellachse LA beaufschlagt, wobei der Antriebskörper 34 in dieser Längsposition in gestrichelten Linien dargestellt ist.

Wenn der Antriebskörper 34 eine der Lösestellung L zugeordnete Längsposition einnimmt (in durchgezogenen Linien dargestellt), können der oder die Fixierkörper 36 aus den Fixieraufnahmen 37 heraus gelangen, sodass die Fixierelemente 31, 32 außer Eingriff bewegbar sind, um anschließend die Lösestellung L einzunehmen.

Der Fixierantrieb 33 kann beispielsweise anstelle oder in Ergänzung der Feder 39 in Richtung der Fixierstellung F wirksam sein.

Der Fixierantrieb 33 kann auch, wie beim Ausführungsbeispiel, als ein Löseantrieb dienen, d. h. er ist zur Verstellung der Fixiereinrichtung 30 in Richtung der Lösestellung L geeignet. Dazu weist der Antriebskörper 34 eine Lösebetätigungsfläche 38 auf, mit der der Antriebskörper 34 in der der Lösestellung L zugeordneten Längspositionen Antriebskörper 38A, beispielsweise Kugeln, in Richtung einer Widerlagerfläche 38B beaufschlagt, wodurch das Lagerelement 23 vom Halter 14 entlang der Verstellachse LA weg verstellt wird. Dadurch gelangen die Fixierelemente 31, 32 außer Eingriff und nehmen die Lösestellung L ein.

Der Lagerkörper 26 ist beispielsweise als eine Hohlwelle ausgestaltet, in dessen Innenraum 29 der Antriebskörper 34 verschieblich aufgenommen ist. Mithin bildet also der Innenraum 29 eine Lageraufnahme eines Linearlagers für den Antriebskörper 34. Die Fixierkörper 36 und die Antriebskörper 38A sind in Durchtrittsöffnungen 29A aufgenommen, durch die hindurch die Fixierkörper 36 und Antriebskörper 38A durch den Antriebskörper 34 nach außen in Richtung der Fixieraufnahmen 37 oder Widerlagerflächen 38B betätigbar sind.

Die Anhängekupplung 10 weist eine Antriebseinrichtung 40 zum Antreiben des Fixierantriebs 30 und/oder des Kupplungsarms 20 auf. Die Antriebseinrichtung 40 umfasst einen Antriebsmotor 41, beispielsweise einen elektrischen Antriebsmotor. Ein Abtrieb 41A des Antriebsmotors 41 treibt ein Getriebe 42 zum Antreiben des Fixierantriebs 30 sowie zum Antreiben des Kupplungsarms 20 an.

Der Abtrieb 41A treibt ein Getriebe 42 an.

Das Getriebe 42 umfasst ein Winkelgetriebe 43 mit einem durch den Abtrieb 41A angetriebenen Antriebsrad 43A, welches an einer Welle 43B angeordnet ist. An der Welle 43B ist ein Abtriebsrad 43C angeordnet, über welches ein weiteres Winkelgetriebe 44 angetrieben ist.

Das Winkelgetriebe 44 umfasst ein Antriebsrad 44A, welches mit dem Abtriebsrad 43C kämmt. Das Antriebsrad 44A ist an einer Welle 44B angeordnet. Die Welle 44B bildet eine Antriebswelle für ein Getriebe 45, welches den Fixierantrieb 33 sowie den Kupplungsarm 20 antreibt.

Der Abtrieb 41A dreht um eine Drehachse D1 und treibt das Winkelgetriebe 43 an, dessen Abtrieb um eine Drehachse D2 dreht, die zu der Drehachse D1 winkelig, vorliegend rechtwinkelig, ist.

Die Welle 44B, also der Abtrieb des Winkelgetriebes 44, dreht um eine Drehachse D3, die zur Drehachse D2 winkelig, vorliegend rechtwinkelig ist und zur Drehachse D1 parallel ist.

An der Welle 44B sind Antriebsräder 46 und 47 drehfest angeordnet, die mit Antriebsrädern 48 und 49 kämmen.

Die Antriebsräder 46 und 48 treiben den Fixierantrieb 33 von der Fixierstellung F in Richtung der Lösestellung L an.

Die Antriebsräder 47 und 49 treiben den Kupplungsarm 20 zu einer Schwenkbewegung zwischen der Gebrauchsstellung G und der Ruhestellung R an, wenn die Fixiereinrichtung 30 die Lösestellung L einnimmt.

Durch Freigänge, Freiläufe und dergleichen sind die Bewegungen des Getriebes 45 derart aufeinander abgestimmt, dass dann die Fixiereinrichtung 30, wenn der Kupplungsarm 20 die Gebrauchsstellung G oder die Ruhestellung F einnimmt, zwischen der Fixierstellung F und der Lösestellung L bewegt wird und dass der Kupplungsarm 20 durch die Antriebsräder 47 und 49 zwischen der Gebrauchsstellung G und der Ruhestellung R dann angetrieben ist, wenn die Fixiereinrichtung 30 die Lösestellung L einnimmt.

Die Antriebseinrichtung 40 ist in einem Schutzgehäuse 50 aufgenommen. Das Schutzgehäuse 50 bildet ein Kapselgehäuse, welches die Antriebseinrichtung 40, also beispielsweise den Antriebsmotor 41 und das Getriebe 42 mit dessen Winkelgetrieben 43, 44 und dem Getriebe 45 gegenüber Umwelteinflüssen schützt und kapselt.

Das Schutzgehäuse 50 weist eine Außenwand 51 auf, die einen Innenraum 52 begrenzt und/oder umschließt, in dem die Antriebseinrichtung 40 aufgenommen ist.

Mit einer Stirnseite 53 der Außenwand 51 ist das Schutzgehäuse 50 an dem Halter 14 abgestützt.

Beispielsweise ist das Schutzgehäuse 50 mit dem Halter 14 stoffschlüssig verbunden, zum Beispiel angeschweißt oder angeklebt.

Bevorzugt ist eine lösbare Befestigung des Schutzgehäuses 50 am Halter 14, beispielsweise anhand einer Verschraubung mittels Schrauben 53A, die durch Schraubdome 53B des Schutzgehäuses 50 durchgesteckt und in den Halter 14 eingeschraubt sind.

Die an dem Halter 14 montierte Antriebseinrichtung 40, also beispielsweise der Antriebsmotor 41 und das Getriebe 42, stehen vor den Halter 14 vor und sind in dem Innenraum 52 aufgenommen.

Das Schutzgehäuse 50 hat eine haubenförmige Gestalt.

Beispielsweise nimmt ein Abschnitt 54 des Schutzgehäuses 50 das Getriebe 45 und einen Abschnitt des Lagerkörpers 26 auf und ein mit dem Abschnitt 54 verbundener Abschnitt 55 des Schutzgehäuses 50 nimmt den Antriebsmotor 41 und die Winkelgetriebe 43, 44 auf.

Die Außenwand 51 des Schutzgehäuses 50 ist vorzugsweise einstückig oder einteilig, sodass dieses den Innenraum 52 optimal verschließen kann.

Es ist aber auch möglich, dass das Schutzgehäuse 50 miteinander verbundene, schematisch angedeutete Gehäuseteile 50A, 50B aufweist.

Das Schutzgehäuse 50 weist eine hohe Steifigkeit auf.

Bevorzugt ist es, wenn der Schutzgehäuse 50 beispielsweise aus Metall und/oder Kunststoff, insbesondere einem thermoplastischen Kunststoff, besteht.

Das Schutzgehäuse 50 weist weiterhin eine Verstärkungsstruktur 56 auf, beispielsweise eine Rippenstruktur.

Die dem Halter 14 zugewandte Seite des Schutzgehäuses 50 weist eine Einstecköffnung 53C zum Einstecken beispielsweise des Antriebsmotors 41 und des Getriebes 42 auf.

Zudem ist eine Durchtrittsöffnung 57 am Schutzgehäuse 50 vorhanden.

Durch die Durchtrittsöffnung 50 hindurch ist ein Kabel 80 geführt, welches zu Betriebseinrichtungen 85, 86 im Innenraum 52 des Schutzgehäuses 50 führt. Die Betriebseinrichtung 85 ist beispielsweise durch den Antriebsmotor 41 gebildet. Die Betriebseinrichtung 86 ist beispielsweise als ein Sensor 86A ausgestaltet, der zur Erfassung mindestens einer Funktion der Anhängekupplung 10 ausgestaltet ist.

Der Sensor 86A ist beispielsweise fest mit einem Strang 80A des Kabels 80 verbunden, wobei auch eine elektrische Steckverbindung möglich wäre, wie beispielsweise beim Antriebsmotor 41 bzw. der Betriebseinrichtung 85.

An dem Antriebsmotor 41 und somit der Betriebseinrichtung 85 ist beispielsweise ein elektrischer Steckverbinder 85A zur Herstellung einer elektrisch leitenden Steckverbindung mit einem Steckverbinder 83, der an einem Strang 80B des Kabels 80 angeordnet ist, angeordnet. Elektrische Kontakte 85B der Steckverbinder 85A, 83, beispielsweise elektrisch leitende Steckvorsprünge und Steckaufnahmen, sind in der Zeichnung angedeutet. Durch die geschützte Anordnung im Innenraum 52 sind bei den Steckverbindern 85A und 83 besondere Schutzmaßnahmen zum Schutz gegenüber Umwelteinflüssen nicht notwendig, können aber optional vorgesehen sein.

Beispielsweise kann der Sensor 86A zur Erfassung der Fixierstellung F oder der Lösestellung L der Fixiereinrichtung 30 vorgesehen sein und/oder zur Erfassung der Gebrauchsstellung G und/oder der Ruhestellung R des Kupplungsarms 20.

An ihrem vor das Schutzgehäuse 50 vorstehenden Endbereich ist das Kabel 80 mit einem Steckverbinder 84 verbunden, mit dem eine Verbindung der Betriebseinrichtungen 85, 86 mit einem Steckverbinder 87 eines Steuergeräts 88 möglich ist. Der Steckverbinder 87 kann unmittelbar an einem Gehäuse des Steuergeräts 88 angeordnet sein oder beispielsweise mit einer Leitung 88A mit dem Steuergerät 88 verbunden sein.

Die Steckverbinder 84, 87 weisen beispielsweise Kontakte 87A zur elektrischen Verbindung des Steuergeräts 88 mit dem Antriebsmotor 41 bzw. der Betriebseinrichtung 85 sowie Kontakte 87B zur elektrischen Verbindung des Steuergeräts 88 mit dem Sensor 86A und somit der Betriebseinrichtung 86 auf. Die Steckverbinder 84, 87 weisen beispielsweise eine elektrische Schutzklasse IP 67 oder dergleichen andere Schutzklasse auf. Mithin ist es vorteilhaft, wenn die Steckverbinder 84, 87 gegenüber Umwelteinflüssen abgedichtet sind.

Das Steuergerät 88 ist beispielsweise mit einem Bordnetz 94 des Kraftfahrzeugs 90 verbunden oder verbindbar. Das Steuergerät 88 kann einen Bestandteil der Anhängekupplung 10 bilden. Es ist beispielsweise auch möglich, dass das Steuergerät 88 im Innenraum 52 des Schutzgehäuses 50 angeordnet ist und mit einer Leitung vergleichbar mit der Leitung 80 mit dem Bordnetz 94 verbunden ist.

Mit dem Steuergerät 88 ist beispielsweise der Antriebsmotor 41 ansteuerbar, um die Fixiereinrichtung 30 in Richtung der Lösestellung L zu betätigen und den Kupplungsarm 20 zwischen der Ruhestellung R und der Gebrauchsstellung G zu verstellen. Anhand des Sensors 86A, optional weiteren Sensoren, zum Beispiel an Bord des Antriebsmotors 41, kann das Steuergerät 88 Betriebszustände der Antriebseinrichtung 40 und/oder der Anhängekupplung 10 erfassen und dementsprechend ansteuern.

Die Durchtrittsöffnung 57 und der Kabel-Durchlass 61A weisen wesentlich größere Durchmesser auf, als für die Kabel 80, 81 an sich erforderlich wäre.

Die Durchtrittsöffnung 57 und die Einstecköffnung 53C sind an zueinander winkeligen Seiten und/oder in einem Abstand zueinander angeordnet.

Wenn das Schutzgehäuse 50 am Halter 14 angeordnet ist, ist die Einstecköffnung 53C durch den Halter 14 sozusagen verschlossen. Der Halter 14 bildet einen Deckel für die Einstecköffnung 53C.

Die Durchtrittsöffnung 57 ist durch eine Kabeltülle 60 verschlossen oder verschließbar. Die Kabeltülle 60 umfasst eine Verbindungspartie 61, die an der Durchtrittsöffnung 57 angeordnet ist und diese verschließt, sowie eine Kabel-Partie 62, an der ein Kabel-Aufnahmekanal 63 zur Aufnahme der Kabel 80, 81 angeordnet ist. An der Verbindungspartie 61 ist ein mit der Durchtrittsöffnung 57 kommunizierender und/oder fluchtender Kabel-Durchlass 61A der Kabeltülle 60 angeordnet.

Die Betriebseinrichtungen 85, 86, das Schutzgehäuse 50 sowie die Kabeltülle 60 bilden ein Betriebsgerät 15 zum Betreiben der Anhängekupplung 10.

In dem Kabel-Aufnahmekanal 63 ist das Kabel 80 dicht gegenüber Umwelteinflüssen geschützt aufgenommen. Mithin steht also ein freier Endbereich des Kabels 80 zwar vor eine Kanalöffnung 64 des Kabel-Aufnahmekanals 63 vor. Die Kanalöffnung 64 ist jedoch dicht verschlossen oder umschließt das Kabel 80, dicht, sodass kein Schmutz, Wasser oder dergleichen in die Kanalöffnung 64 eindringen kann.

Die Verbindungspartie 61 weist eine Aufnahmenut 65 auf, die zwischen Stützflanschen 65A, 65B ausgebildet ist. Eine die Durchtrittsöffnung 57 begrenzende Partie der Außenwand 51 des Schutzgehäuses 50 greift in die Aufnahmenut 65 ein. Somit ist ein Stützflansch 65A im Innenraum 52 angeordnet, während der andere Stützflansch 65B außerhalb des Schutzgehäuses 50 angeordnet ist.

Anhand der Aufnahmenut 65 und/oder der Stützflansche 65A, 65B ist die Verbindungspartie 61 in die Durchtrittsöffnung 57 und/oder das Schutzgehäuse 50 einknöpfbar.

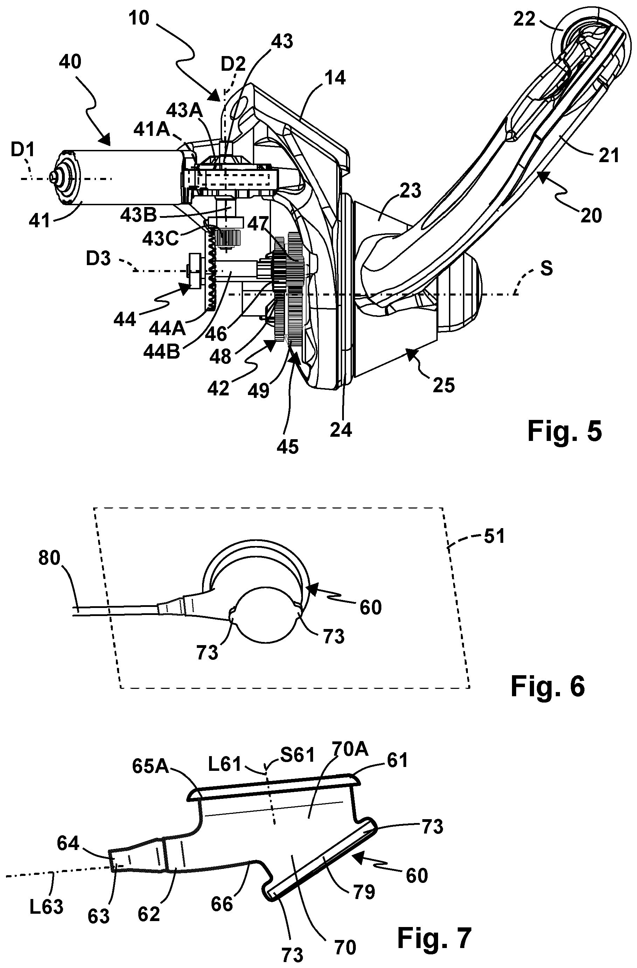

An dieser Stelle sei bemerkt, dass auch beispielsweise der Stützflansch 65A oder 65B ausreichen würde, um einen dichten, formschlüssigen Halt der Kabeltülle 60 zu ermöglichen. Angedeutet ist Beispielweise in Figur 7 nur ein einziger Stützflansch 65A, der sich an der Außenwand 51 des Schutzgehäuses 50 im Innenraum 52 abstützt und somit die Kabeltülle 60 zugfest und dicht mit dem Gehäuse 50 verbinden kann. Gerade in dieser Situation ist es vorteilhaft, wenn zusätzlich eine stoffschlüssige Verbindung, wie nachfolgend erläutert, zwischen der Kabeltülle 60 und dem Schutzgehäuse 50 hergestellt ist.

Weiterhin ist es möglich, dass die Verbindungspartie 61 mit dem Schutzgehäuse 50 stoffschlüssig verbunden ist, beispielsweise verklebt oder dergleichen. Beispielweise ist es möglich, dass einer oder beide Flanschabschnitte 65A, 65B mit der Außenwand 51 im Bereich der Durchtrittsöffnung 57 verklebt ist.

Das Kabel 80 kann mehrere Leitungen oder Leiter umfassen.

Es ist auch möglich, dass in einem gemeinsamen Kabelmantel 82 sowohl der Kabelstrang 80A als auch der Kabelstrang 80B geführt sind und dieser Kabelmantel 82 in dem Kabel-Aufnahmekanal 63 aufgenommen ist.

Der Kabelmantel 82 kann ein Schlauch sein oder auch beispielsweise durch ein Isolierband gebildet sein, mit dem die Kabelstränge 80A und 80B umwickelt sind.

Die Kabelstränge 80A, 80B sind in dieser Konfiguration beispielsweise im Innenraum 52 des Schutzgehäuses 50 aus dem Kabelmantel 82 herausgeführt und mit dem Sensor 86A und dem Steckverbinder 83 verbunden.

Das Steuergerät 88 und/oder der Antriebsmotor 41 sind zur Ansteuerung einer Funktionseinheit 75 ausgestaltet.

Die Funktionseinheit 75 umfasst beispielsweise einen Lautsprecher 75A, mit dem ein Warnsignal ausgebbar ist, wenn die Fixiereinrichtung 30 ihre Lösestellung L einnimmt und/oder der Kupplungsarm 20 nicht fixiert ist. Nun wäre es prinzipiell möglich, die Funktionseinheit 75 im Innenraum 52 des Schutzgehäuses 50 anzuordnen.

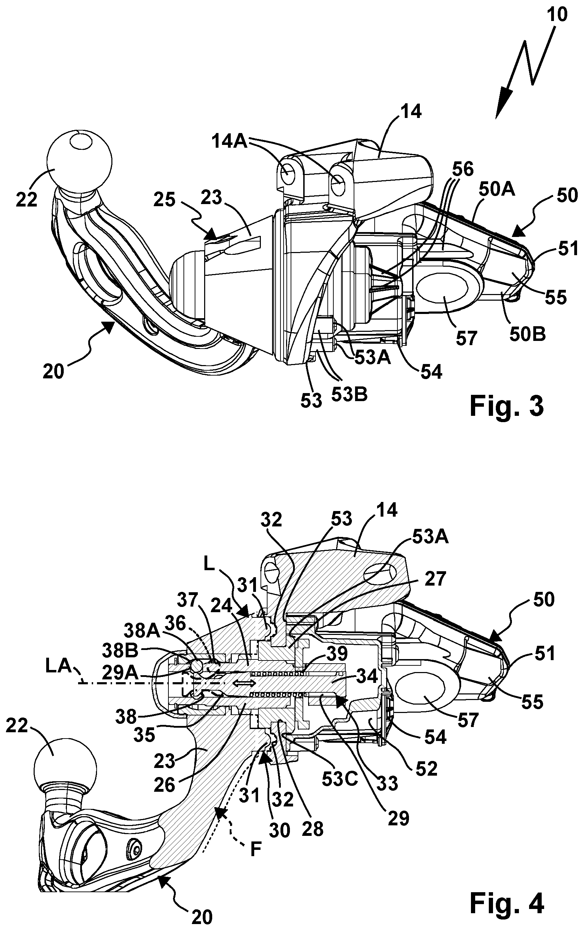

Dazu ist eine ausreichende Aufnahmekapazität des Innenraums 52 notwendig. Man erkennt in beispielsweise der Figur 3, dass das Schutzgehäuse 50 möglichst kompakt aufgebaut ist, sodass es in den kleinen Bauraum zwischen dem Stoßfänger 92 und der Karosserie 91 des Kraftfahrzeugs 90 optimal eingepasst oder einpassbar ist.

Hier schafft die besondere Ausgestaltung der Kabeltülle 60 Abhilfe:
Die Kabeltülle 60 weist einen Wandabschnitt 66 mit einer Aufnahme 70 zur Aufnahme der Funktionseinheit 75 auf. Die Aufnahme 70 umfasst beispielsweise einen Boden 71 sowie eine Umfangswand 72, die insgesamt eine Steckaufnahme 70A begrenzen. In die Steckaufnahme 70A kann ein Gehäuse 76 der Funktionseinheit 75 eingesteckt werden.

An der Umfangswand 72 sind Formschlussaufnahmen 73, beispielsweise Vertiefungen, in einem Abstand zueinander vorgesehen, in die Formschlussvorsprünge 77, die vor das Gehäuse 76 der Funktionseinheit 75 vorstehen, formschlüssig eingreifen. Dadurch ist die Funktionseinheit 75 in der Aufnahme 70 formschlüssig gehalten.

Weiterhin ist es vorteilhaft, wenn das Material der Kabeltülle 60 ein flexibles, nachgiebiges Material ist, beispielsweise ein flexibler Kautschuk, insbesondere ein synthetischer Kautschuk oder dergleichen. Das Material der Kabeltülle 60 ist weicher als das Material des Schutzgehäuses 50. Im Gegensatz zum Material des Schutzgehäuses 50 ist die Kabeltülle 60 flexibel und/oder elastisch verformbar.

Somit kann die Kabeltülle 60 gerade im Bereich der Aufnahme 70 in der Art eines Aufnahmeschlauches oder dergleichen ausgestaltet sein, die die Funktionseinheit 75 im Klemmsitz hält. Die Umfangswand 72 gibt beim Einstecken des Gehäuses 76 nach, wobei auch die Formschlussvorsprünge 77 an der Umfangswand 72 entlang gleiten können und diese partiell aufweisen können, bis sie in die Formschlussaufnahmen 73 einrasten.

Die Funktionseinheit 75 ist sozusagen mit ihrer Rückseite oder Bodenseite in die Aufnahme 70 eingesteckt. Durch einen Pfeil SA ist angedeutet, dass eine Schallaustrittsöffnung der Funktionseinheit 75 in Richtung des Innenraums 52 gerichtet ist, sodass von der Funktionseinheit 75 abgestrahlter Schall in den Innenraum 52 hineinstrahlt und reflektiert wird, sodass er durch den schalldurchlässigen Wandabschnitt 66 nach außen abstrahlen kann.

Die Funktionseinheit 75 ist beispielsweise anhand eines Kabels 89 mit dem Steckverbinder 83 verbunden. Das Kabel 89 kann im Innenraum der Kabeltülle 60 aus dem Kabelmantel 82 herausgeführt sein. Beispielsweise ist das Steuergerät 88 zur Ansteuerung der Funktionseinheit 75 ausgestaltet. Es ist aber auch möglich, dass das Kabel 89 mit dem Antriebsmotor 41 verbunden ist. Wenn der Antriebsmotor 41 beispielsweise den Kupplungsarm 20 zwischen der Ruhestellung R und der Gebrauchsstellung G verstellt und/oder die Fixiereinrichtung 30 in Richtung der Lösestellung L betätigt, steuert der Antriebsmotor 41 die Funktionseinheit 75 zur Abgabe von Schall oder dergleichen anderen Warnhinweisen an.

Die Funktionseinheit 75 kann auch ein Leuchtmittel 78 umfassen, zum Beispiel eine LED. Das Leuchtmittel 78 kann durch einen lichtdurchlässigen Abschnitt 67 des Wandabschnitts 66, beispielsweise am Boden 71 der Aufnahme 70, Licht LI in die Umgebung, beispielsweise einen Untergrund, auf dem das Kraftfahrzeug 90 steht, abstrahlen. Somit kann beispielsweise ein optischer Warnhinweis von der Anhängekupplung 10, beispielsweise dem Steuergerät 88 und/oder dem Antriebsmotor 41, abgegeben werden, wenn die Fixiereinrichtung 30 die Lösestellung L einnimmt und/oder der Kupplungsarm 20 bewegt wird.

Weiterhin kann die Funktionseinheit 75 auch einen Schalter 79 umfassen, beispielsweise einen Tastschalter oder Druckschalter, der durch einen Bediener betätigbar ist. Beispielsweise kann der Bediener durch Druck auf den Boden 71 der Aufnahme 70 eine Tast-Betätigung auf den Schalter 79 ausüben. Anhand des Schalters 79 ist beispielsweise das Steuergerät 88 ansteuerbar, um beispielsweise den Fixierantrieb 33 zum Lösen der Fixiereinrichtung 30 zu betätigen und/oder den Kupplungsarm 20 zwischen der Ruhestellung R und der Gebrauchsstellung G anzutreiben.

Eine Längsachse L63 des Kabel-Aufnahmekanals 63 verläuft winkelig zu einer Steckachse S61, mit der die Verbindungspartie 61 in die Durchtrittsöffnung 57 einsteckbar ist und/oder winkelig zu einer zu einer Längsachse L61 des Kabel-Durchlasses 61A der Verbindungspartie 61. Mithin gibt also die Kabeltülle 60 dem Kabel 80 einen winkeligen oder bogenförmigen Verlauf ausgehend von der Durchtrittsöffnung 57 bis zur Kanalöffnung 64 des Kabel-Aufnahmekanals 63 vor.

Anstelle der Kabeltülle 60 kann auch eine Kabeltülle 160 in der Durchtrittsöffnung 57 oder an der Durchtrittsöffnung 57 angeordnet werden. Dies ist in den Figuren 8, 9 und 10 angedeutet. Die Kabeltülle 160 gleicht an sich der Kabeltülle 60, hat also beispielsweise die Stützflansche 65A und/oder 65B an einer Verbindungspartie 61 sowie eine Kabel-Partie 62 mit einem Kabel-Aufnahmekanal 63 sowie einer Kanalöffnung 64 für das Kabel 80. Allerdings ist keine Aufnahme 70 bei der Kabeltülle 160 vorgesehen.

## Patentansprüche

1. Betriebsgerät zum Betreiben einer Anhängekupplung (10) oder als Bestandteil einer Anhängekupplung (10) für ein Kraftfahrzeug (90), wobei die Anhängekupplung (10) einen an einem an dem Kraftfahrzeug (90) befestigten oder befestigbaren Halter (14) angeordneten Kupplungsarm (20) aufweist, an dessen freiem Endbereich ein Kuppelelement (22), insbesondere eine Kupplungskugel, zum Ankuppeln eines Anhängers (A) oder Lastenträgers angeordnet ist, wobei das Betriebsgerät (15) mindestens eine elektrische Betriebseinrichtung (85, 86) zum Betreiben der Anhängekupplung (10) aufweist, wobei die mindestens eine Betriebseinrichtung (85, 86) mindestens einen Sensor (86A) und/oder mindestens einen Antriebsmotor (41) und/oder mindestens ein Steuergerät (88) umfasst, wobei das Betriebsgerät (15) ein Schutzgehäuse (50) umfasst, in dessen Innenraum (52) die mindestens eine Betriebseinrichtung (85, 86) vor Umwelteinflüssen geschützt anordenbar oder angeordnet ist, wobei das Betriebsgerät (15) mindestens eine Kabeltülle (60) für ein Kabel (80) aufweist, das mit der mindestens einen Betriebseinrichtung (85, 86) verbunden oder verbindbar ist, wobei die Kabeltülle (60) an einander entgegengesetzten Endbereichen eine Verbindungspartie (61), die einen Kabel-Durchlass (61A) für das Kabel (80) aufweist und mit dem Schutzgehäuse (50) im Bereich einer Durchtrittsöffnung (57) des Schutzgehäuses (50) für das Kabel (80) dicht verbunden oder verbindbar ist, und einen Kabel-Aufnahmekanal (63) zur, insbesondere gegenüber Umwelteinflüssen abgedichteten, Aufnahme des Kabels (80) aufweist, sodass das Kabel (80) durch den Kabel-Aufnahmekanal (63) und die Verbindungspartie (61) hindurch in das Schutzgehäuse (50) hinein zu der elektrischen Betriebseinrichtung (85, 86) geführt oder führbar ist, und wobei die Kabeltülle (60) eine Aufnahme (70) für eine elektrische Funktionseinheit (75) zur Ausgabe einer insbesondere akustischen Information und/oder zur Eingabe eines Steuerbefehls aufweist, **dadurch gekennzeichnet, dass** das Schutzgehäuse (50) aus einem härteren Material besteht als die Kabeltülle (60).

2. Betriebsgerät nach Anspruch 1, **dadurch gekennzeichnet, dass** das Schutzgehäuse (50) eine Verstärkungsstruktur (56), insbesondere eine Rippenstruktur, aufweist und/oder das Schutzgehäuse (50) steifer als die Kabeltülle (60) ist.

3. Betriebsgerät nach Anspruch 1 oder 2, **dadurch gekennzeichnet, dass** das Schutzgehäuse (50) aus thermoplastischem Kunststoff und/oder Metall besteht und/oder dass die Kabeltülle (60) aus einem elastischen und/oder flexiblen Material, insbesondere aus Gummi und/oder einem synthetischen Kautschuk, bevorzugt Ethylen-Propylen-Dien-Kautschuk, besteht.

4. Betriebsgerät nach einem der vorhergehenden Ansprüche, **dadurch gekennzeichnet, dass** die Funktionseinheit (75) eine optische und/oder akustische Funktionseinheit (75), insbesondere einen Lautsprecher (75A), umfasst oder dadurch gebildet ist, wobei vorteilhaft vorgesehen ist, dass eine Schallaustrittsöffnung des Lautsprechers (75A) zu dem und/oder in den Innenraum (52) des Schutzgehäuses (50) gerichtet ist und/oder dass das Schutzgehäuse (50) als ein Schallreflektor für den Lautsprecher (75A) ausgebildet ist.

5. Betriebsgerät nach einem der vorhergehenden Ansprüche, **dadurch gekennzeichnet, dass** die Funktionseinheit (75) einen durch einen Bediener betätigbaren Schalter (79) umfasst oder dadurch gebildet ist und/oder dass die Aufnahme (70) als eine Steckaufnahme (70A) ausgebildet ist und/oder eine Umfangswand (72) sowie einen Boden aufweist.

6. Betriebsgerät nach einem der vorhergehenden Ansprüche, **dadurch gekennzeichnet, dass** die Aufnahme (70) mindestens eine Formschlusskontur zum formschlüssigen Halten der Funktionseinheit (75) aufweist, wobei vorteilhaft vorgesehen ist, dass die mindestens eine Formschlusskontur zum verdrehsicheren Halten der Funktionseinheit (75) ausgestaltet ist und/oder dass die mindestens eine Formschlusskontur an zueinander winkeligen und/oder zueinander entgegengesetzten Seiten, insbesondere an der Umfangswand (72) angeordnete, Formschlussaufnahmen (73) zur Aufnahme (70) von Formschlussvorsprüngen (77) der Funktionseinheit (75) aufweist..

7. Betriebsgerät nach einem der vorhergehenden Ansprüche, **dadurch gekennzeichnet, dass** die Funktionseinheit (75) in der Aufnahme (70) in einem Klemmsitz gehalten ist und/oder dass die Kabeltülle (60) mit dem Schutzgehäuse (50) formschlüssig und/oder kraftschlüssig und/oder stoffschlüssig verbunden ist, insbesondere in das Schutzgehäuse (50) eingeknöpft ist.

8. Betriebsgerät nach einem der vorhergehenden Ansprüche, **dadurch gekennzeichnet, dass** die Verbindungspartie (61) mindestens einen sich um den Kabel-Durchlass (61A) ringförmig erstreckenden Kragenvorsprung und/oder Stützflansch (65A, 65B) zur dichtenden Anlage an einer die Durchtrittsöffnung (57) des Schutzgehäuses (50) begrenzenden Wand des Schutzgehäuses (50) aufweist und/oder dass die Verbindungspartie (61) eine sich um den Kabel-Durchlass (61A) ringförmig erstreckende Aufnahmenut (65) zur Aufnahme einer die Durchtrittsöffnung (57) des Schutzgehäuses (50) begrenzenden Wand des Schutzgehäuses (50) aufweist.

9. Betriebsgerät nach einem der vorhergehenden Ansprüche, **dadurch gekennzeichnet, dass** die Aufnahme (70) für die Funktionseinheit (75) in einem Winkelabschnitt zwischen der Verbindungspartie (61) und dem Kabel-Durchlass (61A) angeordnet ist und/oder dass die Kabeltülle (60) eine winkelige oder bogenförmige Gestalt aufweist, wobei eine Längsachse (L61) des Kabel-Durchlasses (61A) an der Verbindungspartie (61) und eine Längsachse (L63) des Kabel-Aufnahmekanals (63), entlang derer das Kabel (80) in dem Kabel-Aufnahmekanal (63) geführt ist, zueinander winkelig, insbesondere rechtwinkelig, sind.

10. Betriebsgerät nach einem der vorhergehenden Ansprüche, **dadurch gekennzeichnet, dass** die Kabeltülle (60) einen Knickschutz für das Kabel (80) darstellt oder bildet oder aufweist und/oder dass die Kabeltülle (60), insbesondere im Bereich der Aufnahme (70), einen für, insbesondere von der Funktionseinheit (75) erzeugtes, Licht lichtdurchlässigen Wandabschnitt (67) aufweist.

11. Betriebsgerät nach einem der vorhergehenden Ansprüche, **dadurch gekennzeichnet, dass** an mindestens einem Endbereich, vorzugsweise beiden Endbereichen des Kabels (80) ein Steckverbinder (83, 84) zur Herstellung elektrischer Verbindungen zu der Betriebseinrichtung (85, 86) und/oder einem Bordnetz (94) des Kraftfahrzeugs (90) angeordnet ist.

12. Betriebsgerät nach einem der vorhergehenden Ansprüche, **dadurch gekennzeichnet, dass** das Schutzgehäuse (50) und die Kabeltülle (60) den Innenraum (52) des Schutzgehäuses (50) gegen ein Eindringen von Feuchtigkeit bei einer Tauchtiefe von mindestens ca. 80 cm bis mindestens 1 m und einer Wirkdauer von mindestens 30 min, vorzugsweise mindestens ca. 1 Stunde, schützen und/oder das Schutzgehäuse (50) und die daran angeordnete Kabeltülle (60) eine die elektrische Schutzklasse IP 67 erfüllen und/oder dass in dem Schutzgehäuse (50) ein Getriebe (42), insbesondere mindestens ein Winkelgetriebe (43, 44), angeordnet ist.

13. Betriebsgerät nach einem der vorhergehenden Ansprüche, **dadurch gekennzeichnet, dass** die Funktionseinheit (75) zur Ausgabe der insbesondere akustischen und/oder optischen Information als ein Betriebshinweis oder Warnhinweis ausgebildet ist, während eine Fixiereinrichtung (30), mit der der Kupplungsarm (20) bezüglich des Halters (14) ortsfest fixierbar ist, eine Lösestellung einnimmt, bei der der Kupplungsarm (20) bezüglich des Halters (14) beweglich, insbesondere verschwenkbar ist, und/oder während einer Verstellung des Kupplungsarms (20) bezüglich des Halters (14) zwischen einer zum Anhängen eines Anhängers oder Befestigen eines Lastenträgers vorgesehenen Gebrauchsstellung (G) und einer näher zu dem Kraftfahrzeug (90) hin verstellten Ruhestellung (R), in der kein Lastenträger oder Anhänger an den Kupplungsarm (20) ankuppelbar ist.

14. Betriebsgerät nach einem der vorhergehenden Ansprüche, **dadurch gekennzeichnet, dass** die Kabeltülle (60) mit der Aufnahme (70) für die elektrische Funktionseinheit (75) lösbar an dem Schutzgehäuse (50) angeordnet ist, sodass anstelle der Kabeltülle (60) mit der Aufnahme (70) für die elektrische Funktionseinheit (75) an dem Schutzgehäuse (50) eine Kabeltülle (160) ohne Aufnahme für eine elektrische Funktionseinheit (75) anordenbar oder angeordnet ist.

15. Anhängekupplung (10) mit einem Betriebsgerät (15) nach einem der vorhergehenden Ansprüche.

## Claims

1. Operating unit for operating a trailer coupling (10) or as a constituent part of a trailer coupling (10) for a motor vehicle (90), wherein the trailer coupling (10) has a coupling arm (20) which is arranged on a holder (14) which is or can be fastened to the motor vehicle (90), a coupling element (22), in particular a coupling ball, for coupling a trailer (A) or load carrier being arranged at the free end region of the coupling arm, wherein the operating unit (15) has at least one electrical operating device (85, 86) for operating the trailer coupling (10), wherein the at least one operating device (85, 86) comprises at least one sensor (86A) and/or at least one drive motor (41) and/or at least one control device (88), wherein the operating unit (15) comprises a protective housing (50), in the interior (52) of which the at least one operating device (85, 86) can be or is arranged in a manner protected against environmental influences, wherein the operating unit (15) has at least one cable grommet (60) for a cable (80) which is or can be connected to the at least one operating device (85, 86), wherein the cable grommet (60) has, in opposite end regions, a connecting portion (61), which has a cable passage (61A) for the cable (80) and is or can be connected in a sealing manner to the protective housing (50) in the region of a passage opening (57) of the protective housing (50) for the cable (80), and a cable receiving channel (63) for receiving the cable (80), in particular in a manner sealed off against environmental influences, so that the cable (80) is or can be guided through the cable receiving channel (63) and the connecting portion (61) into the protective housing (50) and to the electrical operating device (85, 86), and wherein the cable grommet (60) has a receptacle (70) for an electrical functional unit (75) for outputting, in particular, acoustic information and/or for inputting a control command, **characterized in that** the protective housing (50) consists of a harder material than the cable grommet (60).

2. Operating unit according to Claim 1, **characterized in that** the protective housing (50) has a reinforcing structure (56), in particular a ribbed structure, and/or the protective housing (50) is stiffer than the cable grommet (60).

3. Operating unit according to Claim 1 or 2, **characterized in that** the protective housing (50) consists of thermoplastic material and/or metal and/or in that the cable grommet (60) consists of an elastic and/or flexible material, in particular of rubber and/or a synthetic rubber, preferably ethylene-propylene-diene rubber.

4. Operating unit according to any of the preceding claims, **characterized in that** the functional unit (75) comprises an optical and/or acoustic functional unit (75), in particular a loudspeaker (75A), or is formed by it, wherein provision is advantageously made for a sound outlet opening of the loudspeaker (75A) to be directed to and/or into the interior (52) of the protective housing (50) and/or for the protective housing (50) to be designed as a sound reflector for the loudspeaker (75A).

5. Operating unit according to any of the preceding claims, **characterized in that** the functional unit (75) comprises a switch (79), which can be operated by an operator, or is formed by it, and/or **in that** the receptacle (70) is designed as a plug-in receptacle (70A) and/or has a peripheral wall (72) and a floor.

6. Operating unit according to any of the preceding claims, **characterized in that** the receptacle (70) has at least one form-fitting contour for holding the functional unit (75) in a form-fitting manner, wherein provision is advantageously made for the at least one form-fitting contour to be configured to hold the functional unit (75) in a rotationally fixed manner and/or for the at least one form-fitting contour to have form-fitting receptacles (73) for receiving (70) form-fitting projections (77) of the functional unit (75) arranged on sides at an angle to each other and/or opposite each other, in particular on the peripheral wall (72).

7. Operating unit according to any of the preceding claims, **characterized in that** the functional unit (75) is held in the receptacle (70) with a clamping fit and/or in that the cable gromet (60) is connected to the protective housing (50) in a form-fitting and/or force-fitting and/or cohesive manner, in particular is buttoned into the protective housing (50).

8. Operating unit according to any of the preceding claims, **characterized in that** the connecting portion (61) has at least one collar projection and/or support flange (65A, 65B) extending annularly around the cable passage (61A) for bearing in a sealing manner against a wall of the protective housing (50), the wall delimiting the passage opening (57) in the protective housing (50), and/or **in that** the connecting portion (61) has a receiving groove (65) extending annularly around the cable passage (61A) for receiving a wall of the protective housing (50), the wall delimiting the passage opening (57) in the protective housing (50).

9. Operating unit according to any of the preceding claims, **characterized in that** the receptacle (70) for the functional unit (75) is arranged in an angular section between the connecting portion (61) and the cable passage (61A), and/or **in that** the cable grommet (60) has an angular or arcuate shape, wherein a longitudinal axis (L61) of the cable passage (61A) on the connecting portion (61) and a longitudinal axis (L63) of the cable receiving channel (63), along which the cable (80) is guided in the cable receiving channel (63), are at an angle, in particular a right angle, to each other.

10. Operating unit according to any of the preceding claims, **characterized in that** the cable grommet (60) constitutes or forms or has kink protection for the cable (80) and/or **in that** the cable grommet (60), in particular in the region of the receptacle (70), has a transparent wall section (67) for light, in particular light generated by the functional unit (75).

11. Operating unit according to any of the preceding claims, **characterized in that** a plug-in connector (83, 84) for establishing electrical connections to the operating device (85, 86) and/or an on-board electrical system (94) of the motor vehicle (90) is arranged in at least one end region, preferably both end regions, of the cable (80).

12. Operating unit according to any of the preceding claims, **characterized in that** the protective housing (50) and the cable grommet (60) protect the interior (52) of the protective housing (50) against ingress of moisture at an immersion depth of from at least 80 cm up to at least 1 m and for an action time of at least 30 min, preferably at least about 1 hour, and/or the protective housing (50) and the cable grommet (60) arranged thereon comply with the electrical protection class IP 67 and/or in that a gear mechanism (42), in particular at least one angular gear mechanism (43, 44), is arranged in the protective housing (50).

13. Operating unit according to any of the preceding claims, **characterized in that** the functional unit (75) is designed for outputting the, in particular, acoustic and/or optical information as an operating instruction or warning notification while a fixing device (30), by way of which the coupling arm (20) can be fixed in place with respect to the holder (14), assumes a release position, in which the coupling arm (20) is movable, in particular pivotable, with respect to the holder (14), and/or during an adjustment of the coupling arm (20) with respect to the holder (14) between a use position (G) intended for attaching a trailer or fastening a load carrier and an inoperative position (R) which is adjusted closer to the motor vehicle (90) and in which no load carrier or trailer can be coupled to the coupling arm (20).

14. Operating unit according to any of the preceding claims, **characterized in that** the cable grommet (60) with the receptacle (70) for the electrical functional unit (75) is detachably arranged on the protective housing (50), so that, instead of the cable grommet (60) with the receptacle (70) for the electrical functional unit (75), a cable grommet (160) without a receptacle for an electrical functional unit (75) can be or is arranged on the protective housing (50).

15. Trailer coupling (10) having an operating unit (15) according to any of the preceding claims.

## Revendications

1. Appareil d'exploitation pour faire fonctionner un attelage de remorque (10) ou en tant que constituant d'un attelage de remorque (10) pour un véhicule automobile (90), l'attelage de remorque (10) présentant un bras d'attelage (20) agencé sur un support (14) fixé ou pouvant être fixé au véhicule automobile (90), au niveau de la zone d'extrémité libre duquel est agencé un élément d'attelage (22), notamment une boule d'attelage, pour atteler une remorque (A) ou un porte-charges, l'appareil d'exploitation (15) présentant au moins un dispositif d'exploitation électrique (85, 86) pour faire fonctionner l'attelage de remorque (10), l'au moins un dispositif d'exploitation (85, 86) comprenant au moins un capteur (86A) et/ou au moins un moteur d'entraînement (41) et/ou au moins un appareil de commande (88), l'appareil d'exploitation (15) comprenant un boîtier de protection (50) dans l'espace intérieur (52) duquel l'au moins un dispositif d'exploitation (85, 86) peut être agencé ou est agencé protégé des influences environnementales, l'appareil d'exploitation (15) présentant au moins un passe-câble (60) pour un câble (80) qui est relié ou peut être relié à l'au moins un dispositif d'exploitation (85, 86), le passe-câble (60) présentant, au niveau de zones d'extrémité opposées, une partie de liaison (61) qui présente un passage de câble (61A) pour le câble (80) et qui est reliée ou peut être reliée de manière étanche au boîtier de protection (50) dans la zone d'une ouverture de passage (57) du boîtier de protection (50) pour le câble (80), et un canal de réception de câble (63) pour recevoir le câble (80), notamment de manière étanche par rapport aux influences environnementales, de telle sorte que le câble (80) est guidé ou peut être guidé à travers le canal de réception de câble (63) et la partie de liaison (61) dans le boîtier de protection (50) vers le dispositif d'exploitation électrique (85, 86), et le passe-câble (60) présentant un logement (70) pour une unité fonctionnelle électrique (75) pour délivrer une information notamment acoustique et/ou pour recevoir une instruction de commande, **caractérisé en ce que** le boîtier de protection (50) est constitué d'un matériau plus dur que le passe-câble (60).

2. Appareil d'exploitation selon la revendication 1, **caractérisé en ce que** le boîtier de protection (50) présente une structure de renforcement (56), notamment une structure à nervures, et/ou le boîtier de protection (50) est plus rigide que le passe-câble (60).

3. Appareil d'exploitation selon la revendication 1 ou 2, **caractérisé en ce que** le boîtier de protection (50) est constitué de matière thermoplastique et/ou de métal et/ou **en ce que** le passe-câble (60) est constitué d'un matériau élastique et/ou flexible, notamment de caoutchouc et/ou d'un caoutchouc synthétique, de préférence de caoutchouc éthylène-propylène-diène.

4. Appareil d'exploitation selon l'une quelconque des revendications précédentes, **caractérisé en ce que** l'unité fonctionnelle (75) comprend une unité fonctionnelle optique et/ou acoustique (75), notamment un haut-parleur (75A), ou est formée par celle-ci, il étant avantageusement prévu qu'une ouverture de sortie du son du haut-parleur (75A) soit dirigée vers et/ou dans l'espace intérieur (52) du boîtier de protection (50) et/ou que le boîtier de protection (50) soit réalisé sous la forme d'un réflecteur acoustique pour le haut-parleur (75A) .

5. Appareil d'exploitation selon l'une quelconque des revendications précédentes, **caractérisé en ce que** l'unité fonctionnelle (75) comprend ou est formée par un interrupteur (79) pouvant être actionné par un opérateur et/ou **en ce que** le logement (70) est réalisé sous la forme d'un logement enfichable (70A) et/ou présente une paroi périphérique (72) ainsi qu'un fond.

6. Appareil d'exploitation selon l'une quelconque des revendications précédentes, **caractérisé en ce que** le logement (70) présente au moins un contour à complémentarité de forme pour maintenir l'unité fonctionnelle (75) par complémentarité de forme, il étant avantageusement prévu que l'au moins un contour à complémentarité de forme soit conçu pour maintenir l'unité fonctionnelle (75) de manière à l'empêcher de tourner et/ou que l'au moins un contour à complémentarité de forme présente des logements à complémentarité de forme (73) agencés sur des côtés angulaires et/ou opposés les uns aux autres, notamment sur la paroi périphérique (72), pour recevoir (70) des saillies à complémentarité de forme (77) de l'unité fonctionnelle (75).

7. Appareil d'exploitation selon l'une quelconque des revendications précédentes, **caractérisé en ce que** l'unité fonctionnelle (75) est maintenue dans le logement (70) dans un siège de serrage et/ou **en ce que** le passe-câble (60) est relié au boîtier de protection (50) par complémentarité de forme et/ou par adhérence et/ou par liaison matière, notamment est encliqueté dans le boîtier de protection (50).

8. Appareil d'exploitation selon l'une quelconque des revendications précédentes, **caractérisé en ce que** la partie de liaison (61) présente au moins une saillie en forme de collerette et/ou une bride d'appui (65A, 65B) s'étendant de manière annulaire autour du passage de câble (61A) pour venir en application étanche contre une paroi du boîtier de protection (50) délimitant l'ouverture de passage (57) du boîtier de protection (50) et/ou **en ce que** la partie de liaison (61) présente une rainure de réception (65) s'étendant de manière annulaire autour du passage de câble (61A) pour recevoir une paroi du boîtier de protection (50) délimitant l'ouverture de passage (57) du boîtier de protection (50).

9. Appareil d'exploitation selon l'une quelconque des revendications précédentes, **caractérisé en ce que** le logement (70) pour l'unité fonctionnelle (75) est agencé dans une section angulaire entre la partie de liaison (61) et le passage de câble (61A) et/ou **en ce que** le passe-câble (60) présente une forme angulaire ou arquée, un axe longitudinal (L61) du passage de câble (61A) au niveau de la partie de liaison (61) et un axe longitudinal (L63) du canal de réception de câble (63), le long duquel le câble (80) est guidé dans le canal de réception de câble (63), sont angulaires l'un par rapport à l'autre, notamment à angle droit.

10. Appareil d'exploitation selon l'une quelconque des revendications précédentes, **caractérisé en ce que** le passe-câble (60) constitue ou forme ou présente une protection anti-pli pour le câble (80) et/ou **en ce que** le passe-câble (60), notamment dans la zone du logement (70), présente une section de paroi (67) translucide pour la lumière générée notamment par l'unité fonctionnelle (75).

11. Appareil d'exploitation selon l'une quelconque des revendications précédentes, **caractérisé en ce qu'**un connecteur enfichable (83, 84) est agencé au niveau d'au moins une zone d'extrémité, de préférence au niveau des deux zones d'extrémité du câble (80), afin d'établir des liaisons électriques avec l'appareil d'exploitation (85, 86) et/ou un réseau de bord (94) du véhicule automobile (90).

12. Appareil d'exploitation selon l'une quelconque des revendications précédentes, **caractérisé en ce que** le boîtier de protection (50) et le passe-câble (60) protègent l'espace intérieur (52) du boîtier de protection (50) contre la pénétration d'humidité à une profondeur d'immersion d'au moins environ 80 cm à au moins 1 m et pendant une durée d'action d'au moins 30 minutes, de préférence d'au moins environ 1 heure, et/ou le boîtier de protection (50) et le passe-câble (60) qui y est agencé satisfont à la classe de protection électrique IP 67 et/ou une transmission (42), notamment au moins une transmission angulaire (43, 44), est agencée dans le boîtier de protection (50).

13. Appareil d'exploitation selon l'une quelconque des revendications précédentes, **caractérisé en ce que** l'unité fonctionnelle (75) destinée à délivrer l'information notamment acoustique et/ou optique est réalisée sous la forme d'une indication de fonctionnement ou d'un avertissement, pendant qu'un dispositif de fixation (30) avec lequel le bras d'attelage (20) peut être fixé de manière stationnaire par rapport au support (14), occupe une position de détachement dans laquelle le bras d'attelage (20) est mobile, notamment pivotant, par rapport au support (14), et/ou pendant un réglage du bras d'attelage (20) par rapport au support (14) entre une position d'utilisation (G) prévue pour l'attelage d'une remorque ou la fixation d'un porte-charges et une position de repos (R) réglée plus près du véhicule automobile (90), dans laquelle aucun porte-charges ou remorque ne peut être attelé au bras d'attelage (20).

14. Appareil d'exploitation selon l'une quelconque des revendications précédentes, **caractérisé en ce que** le passe-câble (60) avec le logement (70) pour l'unité fonctionnelle électrique (75) est agencé de manière amovible sur le boîtier de protection (50), de telle sorte qu'à la place du passe-câble (60) avec le logement (70) pour l'unité fonctionnelle électrique (75), un passe-câble (160) sans logement pour une unité fonctionnelle électrique (75) peut être agencé ou est agencé sur le boîtier de protection (50).

15. Attelage de remorque (10) avec un appareil d'exploitation (15) selon l'une quelconque des revendications précédentes.
